# EUROPÄISCHE PATENTSCHRIFT

(11) **EP 1 681 153 B1**
(45) Veröffentlichungstag und Bekanntmachung des Hinweises auf die Patenterteilung: **27.08.2008**
(21) Anmeldenummer: 05111727.3
(22) Anmeldetag: 06.12.2005
(51) Int. Cl.: B29D 30/14, B29D 30/24, B29D 30/28

(54) **Verfahren zur Herstellung eines Luftreifens mit Reifenaufbauteilen**
Methof for forming a pneumatic tire with tire-forming components
Procédé de fabrication d'un pneu par composantes

(30) Priorität: 12.01.2005 DE 102005001377
(43) Veröffentlichungstag der Anmeldung: 19.07.2006
(73) Patentinhaber: Continental Aktiengesellschaft, 30165 Hannover (DE)
(72) Erfinder: Baumgart, André, 30880 Ingeln-Oesselse (DE)

(56) Entgegenhaltungen:
- EP-A- 0 071 838
- US-A- 3 152 031
- US-A- 5 380 383
- PATENT ABSTRACTS OF JAPAN Bd. 009, Nr. 294 (M-431), 20. November 1985 (1985-11-20) & JP 60 132745 A (YOKOHAMA GOMU KK), 15. Juli 1985 (1985-07-15)

## Beschreibung

Die Erfindung betrifft ein Verfahren zur Herstellung eines Luftreifens mit Reifenaufbauteilen, die zumindestens einen Laufstreifen, eine Gürtellage sowie eine Karkasse umfassen.

Die konventionelle Herstellung von Luftreifen erfolgt an Reifenaufbautrommeln, bei denen einzelne Reifenaufbauteile in Form von unvulkanisierten Gummistreifen nacheinander auf eine Reifenaufbautrommel aufgewickelt werden. Die Reifenaufbauteile werden über Transport- und Fördervorrichtungen der Reifenaufbautrommel zugeführt, die das Reifenaufbauteil in einer bestimmten Position auf die Reifenaufbautrommel auflegen.

Parallel zum Aufbau der Reifenkarkasse auf der Reifenaufbautrommel wird der Verbund aus Gürtellage und Laufstreifen bei bestimmten Reifentypen auf einer Gürteltrommel aufgebaut. Bei einer konturierten Gürteltrommel kann das Problem auftreten, dass das Verbinden des Laufstreifens mit der Gürtellage nicht ohne Weiteres möglich ist. Insbesondere das Verbinden der Seitenbereiche des Laufstreifens mit der Gürtellage ist aufgrund der abgerundeten Kontur der Gürteltrommel mit Schwierigkeiten verbunden. Eine ähnliche Aufgabenstellung ergibt sich beim Verbinden des Verbundes aus Laufstreifen und Gürtellage mit der Reifenkarkasse.

Die DE 22 46 482 C2 offenbart zur Lösung einer solchen Aufgabenstellung ein komplexes Rollensystem, mit dem der Verbund auf der Karkasse festgedrückt wird. Ein Nachteil beim Einsetzen eines Rollensystems besteht darin, dass dieser Einsatz komplex in der Handhabung ist und insbesondere Lufteinschlüsse auftreten können, die manuell nachgearbeitet werden müssen.

Die US-A-3 152 031 offenbart eine Vorrichtung zur Herstellung eines Luftreifens mit Reifenaufbauteilen, wobei dort eine Karkasseinlage mit Hilfe eines aufblähbaren Balges vorverformt wird. Ferner zeigt die US-A-3 152 031 eine Vorrichtung zum Aufbringen einer Lauffläche auf eine Karkasse, welche durch einen Innenbalg in Torusform verformt wurde, wobei die Lauffläche mittels eines auf dem Aussenumfang der torusförmigen Karkasse angeordneten, aufblasbaren Balges auf die torusförmige Karkasse aufgedrückt wird.

Der Erfindung lag die Aufgabe zugrunde ein Verfahren bereitzustellen, mit dem auf eine einfache Weise und insbesondere möglichst frei von Lufteinschlüssen die Gürtellage und der Laufstreifen eines Fahrzeugreifens miteinander verbunden werden.

Gelöst wird die Aufgabe durch ein Verfahren zur Herstellung eines Luftreifens mit Reifenaufbauteilen, die zumindestens einen Laufstreifen, eine Gürtellage sowie eine Karkasse umfassen gemäß Patentanspruch 1.

Vorteilhafte Weiterbildungen der Erfindung sind Gegenstand der abhängigen Ansprüche.

Ein Vorteil der Erfindung ist insbesondere darin zu sehen, dass durch das erfindungsgemäße Verfahren auf eine einfache Art und Weise das Verbinden der Reifenaufbauteile erfolgt. Der Einsatz der aufblähbaren Manschette ermöglicht einen kontinuierlichen und gleichmäßigen Anpressdruck über die gesamte Fläche der zu verbindenden Reifenaufbauteile, wodurch insbesondere Lufteinschlüsse vermieden werden. Ferner zeichnet sich dieses Verfahren durch eine hohe Prozessgeschwindigkeit aus.

In einer vorteilhaften Weiterbildung der Erfindung ist vorgesehen, dass die Manschette aus einem elastischen Material besteht und luftdicht in Form eines aufblähbaren Balges mit der Trageringvorrichtung verbunden ist. Das elastische Material der Manschette bietet den Vorteil, dass sich die Manschette in allen Bereichen an die Kontur der zu verbindenden Reifenaufbauteile anpassen kann. Dadurch erfolgt ein sehr gleichmäßiges Verbinden der beiden Reifenaufbauteile.

In einer weiteren vorteilhaften Weiterbildung der Erfindung ist vorgesehen, dass die Manschette beim Andrücken des zweiten Reifenaufbauteiles vollständig die Kontur des zweiten Reifenaufbauteiles umschließt. Auf diese Weise werden ebenfalls die Randbereiche des zweiten Reifenaufbauteiles fest mit dem ersten Reifenaufbauteil verbunden.

In einer weiteren vorteilhaften Weiterbildung der Erfmdung ist vorgesehen, dass der Innendurchmesser der Manschette im entspannten Zustand kleiner ist als der Außendurchmesser des herzustellenden Luftreifens. Auf diese Weise erhält die Manschette beim Vorgang des Andrückens eine optimierte Kontur, die zu einer verbesserten Verbindung führt.

In der Erfindung ist vorgesehen, dass das erste Reifenaufbauteil eine Gürtellage und das zweite Reifenaufbauteil ein Laufstreifen ist. Aufgrund der stark konturierten Gürteltrommel ist das erfindungsgemäße Verfahren gerade bei diesen beiden Reifenaufbauteilen vorteilhaft einsetzbar.

In einer weiteren vorteilhaften Weiterbildung der Erfindung ist vorgesehen, dass die Gürtellage ein Null-Grad-Gürtel ist.

In einer weiteren vorteilhaften Weiterbildung der Erfindung ist vorgesehen, dass der Luftreifen ein Radial-Motorradreifen ist. Das Verfahren ist insbesondere bei der Herstellung von Radialmotorradreifen mit einem Null-Grad-Gürtel vorteilhaft einsetzbar, da bei diesem Reifentyp die Gürtellage direkt auf die Gürteltrommel aufgespult wird.

In der Erfmdung ist vorgesehen, dass das Auflegemittel eine Gürteltrommel ist. Die Gürteltrommel ist ein feststehendes Auflegemittel, welches sich beim Anpressen des Laufstreifens an die Gürtellage nicht deformiert.

Ferner kann das erste Reifenaufbauteil die Karkasse und das zweite Reifenaufbauteil ein Verbund aus Gürtellage sowie Laufstreifen sein. Beim Aufbringen des Verbundes aus Gürtellage und Laufstreifen auf die Karkasse ergibt sich aufgrund der gekrümmten Kontur der Karkasse eine ähnliche Aufgabenstellung wie beim Verbinder der Gürtellage mit dem Laufstreifen. Insbesondere das Andrücken der Randbereiche des Verbundes läßt sich mit dem Verfahren auf eine einfache Art und Weise realisieren.

In einer weiteren vorteilhaften Weiterbildung der Erfindung ist vorgesehen, dass die Karkasse auf einem Bombierbalg oder direkt auf ein unter Druck stehendes Luftpolster als Auflegemittel als Auflegemittel aufgelegt wird.

In einer weiteren vorteilhaften Weiterbildung der Erfindung ist vorgesehen, dass beim Transport des Verbundes aus Gürtellage sowie Laufstreifen die Manschette) mit einem Vakuum beaufschlagt ist. Im diesem Zustand lässt sich die Trageringvorrichtung einfach von der Gürteltrommel seitlich verfahren und dann zur Bombierstation transportieren.

Anhand eines Ausführungsbeispiels soll die Erfmdung näher erläutert werden. Es zeigen:
- Fig. 1: einen Verfahrensschritt beim Aufbringen des Laufstreifens auf die Gürtellage,
- Fig. 2: einen weiteren Verfahrensschritt beim Andrücken des Laufstreifens mittels der aufgeblähten Manschette und
- Fig. 3: das Aufbringen des Verbundes aus Gürtellage und Laufstreifen auf die darunter liegende Karkasse.

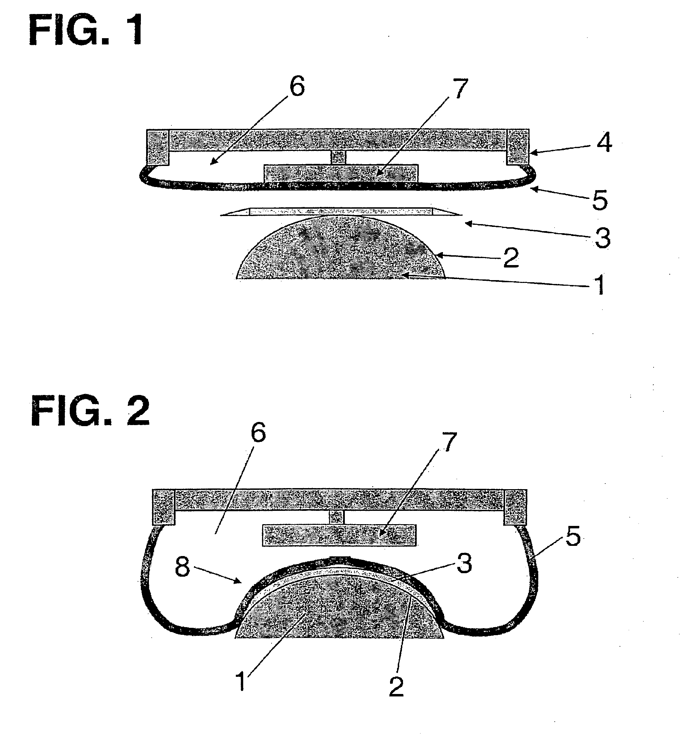

Die Figur 1 zeigt einen Verfahrensschritt des erfindungsgemäßen Verfahrens beim Aufbringen des Laufstreifens auf die Gürtellage. Zunächst wird vorab eine Gürtellage 2 in Form eines Null-Grad-Gürtels auf die Gürteltrommel 1 aufgespult. Bei dem Ausführungsbeispiel handelt es sich um die Herstellung eines Radialmotorradreifens, wobei die Gürteltrommel bereits eine endkonturnahe Form des herzustellenden Reifens besitzt. In einem weiteren Verfahrensschritt wird der Laufstreifen 3 auf die Gürtellage 2 aufgelegt. Bei der Figur handelt es sich um einen Radialschnitt durch die axiale Hauptachse der rotationssymmetrischen Gürteltrommel 1. Sowohl die Gürtellage 2 als auch der Laufstreifen 3 sind vollständig um den Umfang der Gürteltrommel 1 gewickelt. In einem nachfolgenden Verfahrensschritt wird eine Trageringvorrichtung 4 koaxial zur Gürtellage 2 und Gürtellage 3 positioniert. An der Trageringvorrichtung 4 ist auf der Innenseite eine Manschette 5 angebracht. Die Trageringvorrichtung 4 und die Manschette 5 sind ebenfalls im Wesentlichen rotationssymmetrisch und umschließen die Gürteltrommel 1 koaxial. Der Hohlraum 6 in der Manschette 5 befindet sich in der Figur 1 in einem Vakuumzustand, so dass die Manschette 5 einen größeren Durchmesser besitzt als der Außendurchmesser der Gürteltrommel 1.

Die Figur 2 zeigt einen zweiten Verfahrensschritt des erfindungsgemäßen Verfahrens. Der Hohlraum 6 wird mit Druckluft befüllt, wodurch sich die Manschette kontinuierlich aufbläht. Zunächst legt sich die Manschette 5 im Zenit des Laufstreifens 3 an und drückt sodann den Laufstreifen 3 an die darunterliegende Gürtellage 2 herunter, so dass diese beiden Reifenbauteile miteinander verbunden werden. Der Laufstreifen 3 wird sozusagen mittels der Manschette 6 von der Mitte des Laufstreifens 3 zu beiden Seiten seitlich auf die Gürtellage 2 heruntergearbeitet. Anschließend wird die Druckluft im Hohlraum 6 wieder abgelassen, so dass sich die Manschette 6 entspannt. Zum Transportieren des Verbundes 8 aus Gürtellage 2 und Laufstreifen 3 werden sodann mehrere über den Umfang der Trageringrichtung 4 verteilte Trageringsegmente 7 nach radial innen verfahren, die den Verbund der Reifenaufbauteile zwischen sich einklemmen. Gleichzeitig wird der Durchmesser der Gürteltrommel 1 verkleinert, damit der Verbund aus Gürtellage 2 und Laufstreifen 3 seitlich von der Gürteltrommel 1 wegtransportiert werden kann.

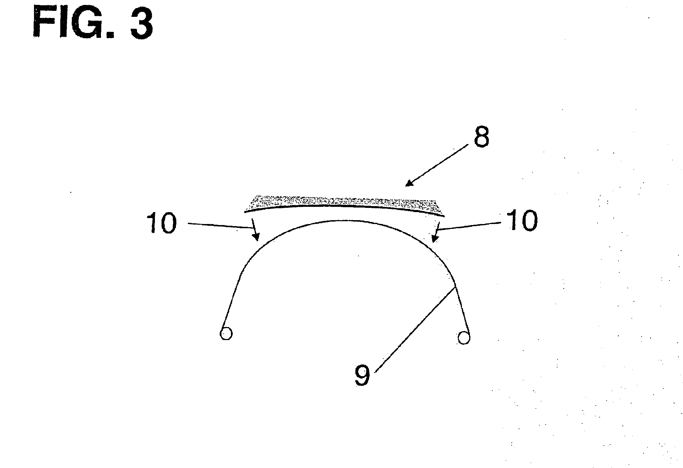

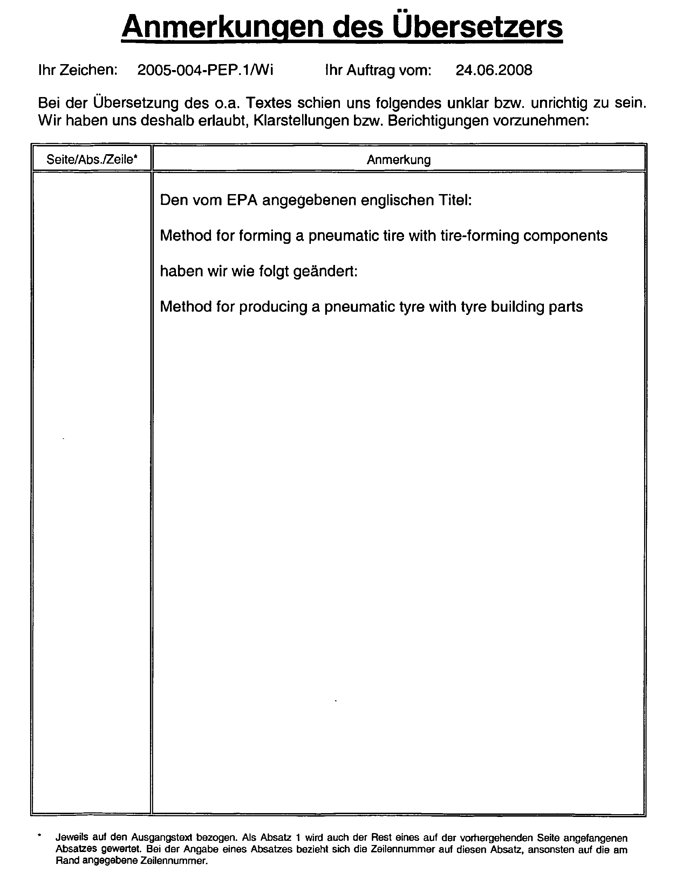

Der Verbund 8 aus Gürtellage 2 und Laufstreifen 3 wird in einem weiteren Verfahrensschritt zur Bombierstation transportiert, in der das Zusammenführen des Verbundes 8 mit der in der Figur 3 dargestellten Reifenkarkasse 9 erfolgt. Bei diesem Verfahrensschritt kommt wiederum das erfindungsgemäße Verfahren zum Tragen, wobei als Auflegemittel ein in der Figur nicht dargestellter Bombierbalg anzusehen ist, oder die Karkasse 9 direkt auf ein unter Druck stehendes Luftpolster aufgelegt wird. Nachdem der Verbund 8 mit der Trageringvorrichtung 4 über die Karkasse 9 verfahren wurde, und die Karkasse 9 über den Bombierbalg hochgearbeitet wurden, wird die nicht dargestellte Manschette der Tragringvorrichtung aufgebläht und dadurch die Seitenbereiche des Verbundes 8 in Richtung 10 auf die Karkasse 9 heruntergearbeitet. Nach der Vereinigung des Verbundes 8 mit der Karkasse 9 erfolgt die weitere Herstellung des Reifens nach einem konventionellen Verfahren.

### Bezugszeichenliste (ist Teil der Beschreibung)

- 1: Gürteltrommel
- 2: Gürtellage
- 3: Laufstreifen
- 4: Trageringvorrichtung
- 5: Manschette
- 6: Hohlraum in der Manschette
- 7: Trageringsegment
- 8: Verbund aus Gürtellage 2 und Laufstreifen 3
- 9: Reifenkarkasse bzw. Karkasse
- 10: Richtung, in der die Seitenbereiche des Verbundes 8 heruntergedrückt werden

## Patentansprüche

1. Verfahren zur Herstellung eines Luftreifens mit Reifenaufbauteilen (2,3,9) , die zumindestens einen Laufstreifen (3), eine Gürtellage (2) sowie eine Karkasse (9) umfassen, mit folgenden Schritten:
- Aufbau eines ersten Reifenaufbauteiles (2) auf ein Auflegemittel (1),
- Aufbringen eines zweiten Reifenaufbauteiles (3) über das erste Reifenaufbauteil (2)
- wobei das erste Reifenaufbauteil eine Gürtellage (2) und das zweite Reifenaufbauteil ein Laufstreifen (3) ist,
- wobei das Auflegemittel eine Gürteltrommel (1) ist,
- Positionierung einer Trageringvorrichtung (4) koaxial zum ersten (2) und zweiten Reifenaufbauteil (3)
- Aufblähen einer an der Trageringvorrichtung (4) angebrachten Manschette(5)
- Andrücken des zweiten Reifenaufbauteiles (3) an das erste Reifenaufbauteil (2) mit dem Anpressdruck der aufgeblähten Manschette (5) und
- Einfallenlassen der Manschette (5) und Weiterverarbeitung des herzustellenden Luftreifens mit einem konventionellen Verfahren.

2. Verfahren nach Anspruch 1,
**dadurch gekennzeichnet, dass**
die Manschette (5) aus einem elastischen Material besteht und luftdicht in Form eines aufblähbaren Balges mit der Trageringvorrichtung (4) verbunden ist.

3. Verfahren nach Anspruch 1 oder 2,
**dadurch gekennzeichnet, dass**
die Manschette (5) beim Andrücken des zweiten Reifenaufbauteiles (3,8) vollständig die Kontur des zweiten Reifenaufbauteiles (3,8) umschließt.

4. Verfahren nach einem der Ansprüche 1 bis 3,
**dadurch gekennzeichnet, dass**
der Innendurchmesser der Manschette (5) im entspannten Zustand kleiner ist als der Außendurchmesser des herzustellenden Luftreifens.

5. Verfahren nach einem der Ansprüche 1 bis 4,
**dadurch gekennzeichnet, dass**
die Gürtellage (2) ein Null-Grad-Gürtel ist.

6. Verfahren nach einem der Ansprüche 1 bis 5,
**dadurch gekennzeichnet, dass**
das der Luftreifen ein Radial-Motorradreifen ist.

7. Verfahren nach einem der Ansprüche 1 bis 6,
**dadurch gekennzeichnet, dass**
das erste Reifenaufbauteil die Karkasse (9) und das zweite Reifenaufbauteil ein Verbund (8) aus Gürtellage (2) sowie Laufstreifen (3) ist.

8. Verfahren nach einem der Ansprüche 1 bis 7,
**dadurch gekennzeichnet, dass**
die Karkasse (9) auf einen Bombierbalg oder direkt auf ein unter Druck stehendes Luftpolster als Auflegemittel aufgelegt wird.

9. Verfahren nach einem der Ansprüche 1 bis 8,
**dadurch gekennzeichnet, dass**
beim Transport des Verbundes (8) aus Gürtellage (2) sowie Laufstreifen (3) die Manschette (5) mit einem Vakuum beaufschlagt ist.

## Claims

1. Method for producing a pneumatic tyre with tyre building parts (2, 3, 9) which comprise at least a tread rubber (3), a breaker belt ply (2) and a carcass (9), with the following steps:
- building a first tyre building part (2) on a lay-up means (1),
- applying a second tyre building part (3) over the first tyre building part (2)
- wherein the first tyre building part is a breaker belt ply (2) and the second tyre building part is a tread rubber (3),
- wherein the lay-up means is a belt drum (1),
- positioning a supporting ring device (4) coaxially with respect to the first tyre building part (2) and the second tyre building part (3),
- inflating a cuff (5) attached to the supporting ring device (4),
- pressing the second tyre building part (3) onto the first tyre building part (2) with the pressing pressure of the inflated cuff (5) and
- deflating the cuff (5) and processing the pneumatic tyre to be produced further by a conventional method.

2. Method according to Claim 1, **characterized in that** the cuff (5) consists of an elastic material and is connected to the supporting ring device (4) in an airtight manner in the form of an inflatable bladder.

3. Method according to Claim 1 or 2, **characterized in that** the cuff (5) completely encloses the contour of the second tyre building part (3, 8) during the pressing on of the second tyre building part (3, 8).

4. Method according to one of Claims 1 to 3, **characterized in that** the inside diameter of the cuff (5) in the relaxed state is less than the outside diameter of the pneumatic tyre to be produced.

5. Method according to one of Claims 1 to 4, **characterized in that** the breaker belt ply (2) is a zero-degree belt.

6. Method according to one of Claims 1 to 5, **characterized in that** the pneumatic tyre is a radial motorcycle tyre.

7. Method according to one of Claims 1 to 6, **characterized in that** the first tyre building part is the carcass (9) and the second tyre building part is a composite (8) comprising the breaker belt ply (2) and the tread rubber (3).

8. Method according to one of Claims 1 to 7, **characterized in that** the carcass (9) is laid on a shaping bladder or directly on a pressurized air cushion as a lay-up means.

9. Method according to one of Claims 1 to 8, **characterized in that,** when the composite (8) comprising the breaker belt ply (2) and the tread rubber (3) is being transported, a vacuum is applied to the cuff (5).

## Revendications

1. Procédé de fabrication d'un bandage pneumatique doté de composants (2, 3, 9) de bandage qui comprennent au moins une bande de roulement (3), une couche de ceinture (2) ainsi qu'une carcasse (9), lequel procédé présente les étapes suivantes :
- formation d'un premier composant (2) du bandage sur un moyen de pose (1),
- placement d'un deuxième composant (3) du bandage sur le premier composant (2) du bandage,
- le premier composant du bandage étant une couche de ceinture (2) et le deuxième composant du bandage une bande de roulement (3),
- le moyen de pose étant un tambour (1) de ceinture,
- placement d'un dispositif annulaire de support (4) coaxialement par rapport au premier composant (2) et au deuxième composant (3) du bandage,
- gonflement d'une manchette (5) installée sur le dispositif annulaire de support (4),
- refoulement du premier composant (3) de bandage contre le premier composant (2) du bandage à l'aide de la poussée de la manchette (5) gonflée et
- dégonflement de la manchette (5) et poursuite du traitement du bandage pneumatique à fabriquer par un procédé classique.

2. Procédé selon la revendication 1, **caractérisé en ce que** la manchette (5) est constituée d'un matériau élastique et présente la forme d'un soufflet gonflable relié de manière étanche au dispositif annulaire de support (4).

3. Procédé selon les revendications 1 ou 2, **caractérisé en ce que** la manchette (5) entoure complètement le contour du deuxième composant (3, 8) du bandage lorsqu'elle repousse le deuxième composant (3, 8) du bandage.

4. Procédé selon l'une des revendications 1 à 3, **caractérisé en ce que** lorsque la manchette (5) est à l'état détendu, son diamètre intérieur est plus petit que le diamètre extérieur du bandage pneumatique à fabriquer.

5. Procédé selon l'une des revendications 1 à 4, **caractérisé en ce que** la couche de ceinture (2) est une ceinture à zéro degré.

6. Procédé selon l'une des revendications 1 à 5, **caractérisé en ce que** le bandage pneumatique est un bandage radial pour motocyclette.

7. Procédé selon l'une des revendications 1 à 6, **caractérisé en ce que** le premier composant du bandage est la carcasse (9) et le deuxième composant du bandage un ensemble (8) constitué de la couche de ceinture (2) et de la bande de roulement (3).

8. Procédé selon l'une des revendications 1 à 7, **caractérisé en ce que** la carcasse (9) est placée sur un soufflet de bombage ou directement sur un coussin d'air sous pression qui sert de moyen de pose.

9. Procédé selon l'une des revendications 1 à 8, **caractérisé en ce que** lors du transport du composite (8) constitué de la couche de ceinture (2) et de la bande de roulement (3), la manchette (5) est mise en dépression.
